# EUROPEAN PATENT SPECIFICATION

(11) **EP 4 163 254 B1**
(45) Date of publication and mention of the grant of the patent: **03.12.2025**
(21) Application number: 22746239.7
(22) Date of filing: 27.01.2022
(51) Int. Cl.: C01B 32/05, C07F 3/06, H01M 4/62, H01M 10/42, H01M 10/052, C01B 32/00, H01M 4/38

(54) **POROUS CARBON STRUCTURE, MANUFACTURING METHOD THEREFOR, AND LITHIUM SECONDARY BATTERY COMPRISING SAME**
PORÖSE KOHLENSTOFFSTRUKTUR, HERSTELLUNGSVERFAHREN DAFÜR UND LITHIUMSEKUNDÄRBATTERIE DAMIT
STRUCTURE DE CARBONE POREUSE, PROCÉDÉ DE FABRICATION ASSOCIÉ ET BATTERIE SECONDAIRE AU LITHIUM LA COMPRENANT

(30) Priority: 27.01.2021 KR 20210011621; 26.01.2022 KR 20220011827
(43) Date of publication of application: 12.04.2023
(73) Proprietor: LG Energy Solution, Ltd., Seoul 07335 (KR); Industry-Academic Cooperation Foundation, Yonsei University, Seoul 03722 (KR)
(72) Inventor: KIM, Ilto, Daejeon 34122 (KR); SOHN, Kwonnam, Daejeon 34122 (KR); LEE, Changhoon, Daejeon 34122 (KR); KIM, Jiwon, Seoul 03004 (KR); KIM, Geonho, Jeonju-si, Jeollabuk-do 55014 (KR); KIM, Dongjun, Incheon 21982 (KR); PARK, Jihyeon, Incheon 21968 (KR); OH, Seoyeah, Bucheon-si, Gyeonggi-do 14631 (KR); YOON, Seoyoung, Cheonan-si, Chungcheongnam-do 31163 (KR); CHOI, Su Bin, Seoul 07775 (KR)
(74) Representative: Goddar, Heinz J.
(86) International application number: PCT/KR2022/001440
(87) International publication number: WO 2022/164213

(56) References cited:
- KR-A- 20180 097 261
- KR-A- 20210 001 662
- KR-A- 20210 001 662
- XU HAORAN ET AL: "Metal-Organic-Framework Derived Core-Shell N-Doped Carbon Nanocages Embedded with Cobalt Nanoparticles as High-Performance Anode Materials for Lithium-Ion Batteries", vol. 30, no. 50, 1 December 2020 (2020-12-01), DE, XP093191817, ISSN: 1616-301X, Retrieved from the Internet <URL:https://onlinelibrary.wiley.com/doi/full-xml/10.1002/adfm.202006188> DOI: 10.1002/adfm.202006188
- KOH KYOUNGMOO ET AL: "MOF@MOF: microporous core-shell architectures", no. 41, 1 January 2009 (2009-01-01), UK, pages 6162, XP055953815, ISSN: 1359-7345, Retrieved from the Internet <URL:https://pubs.rsc.org/en/content/articlepdf/2009/cc/b904526k> DOI: 10.1039/b904526k
- KOH KYOUNGMOO, WONG-FOY ANTEK G., MATZGER ADAM J.: "MOF@MOF: microporous core–shell architectures", CHEMICAL COMMUNICATIONS, ROYAL SOCIETY OF CHEMISTRY, UK, no. 41, 1 January 2009 (2009-01-01), UK , pages 6162, XP055953815, ISSN: 1359-7345, DOI: 10.1039/b904526k
- SZILÁGYI PETRA ÁGOTA, LUTZ MARTIN, GASCON JORGE, JUAN-ALCAÑIZ JANA, VAN ESCH JAN, KAPTEIJN FREEK, GEERLINGS HANS, DAM BERNARD, VAN: "MOF@MOF core–shell vs. Janus particles and the effect of strain: potential for guest sorption, separation and sequestration", CRYSTENGCOMM, vol. 15, no. 30, 1 January 2013 (2013-01-01), pages 6003, XP055953814, DOI: 10.1039/c3ce40653a
- WU SHENJIE, ZHUANG GUOXIN, WEI JINXIN, ZHUANG ZANYONG, YU YAN: "Shape control of core–shell MOF@MOF and derived MOF nanocages via ion modulation in a one-pot strategy", JOURNAL OF MATERIALS CHEMISTRY A, ROYAL SOCIETY OF CHEMISTRY, GB, vol. 6, no. 37, 1 January 2018 (2018-01-01), GB , pages 18234 - 18241, XP055953812, ISSN: 2050-7488, DOI: 10.1039/C8TA06809G

## Description

### [Technical Field]

The present disclosure relates to a porous carbon structure applicable as a positive electrode material for a lithium secondary battery, a preparation method thereof, a positive electrode comprising the porous carbon structure, and a lithium secondary battery comprising the same.

### [Background Art]

A lithium-sulfur (Li-S) secondary battery which is an energy storage device has a theoretical energy density of 2600 Wh/kg and a theoretical capacity of 1672 mAh/g, and is receiving attention as a next-generation energy storage device because it exhibits an energy density that is 3 to 5 times higher than that of a conventional lithium battery. However, the lithium-sulfur secondary battery has poor cycle characteristics for commercial use, and thus studies have been conducted to increase cycle characteristics using various methods.

In particular, by using graphene and activated carbon, which are carbon-based materials, as templates, the method of preventing the volume expansion of sulfur and increasing the conductivity at the same time was mainly used. However, these methods also have many shortcomings in realizing commercialization, and thus it is a situation in which another method must be proposed for commercialization.

A metal organic framework (MOF) is synthesized by hydrothermal synthesis of metal structure and organic ligand (organic linker) in a specific solvent, and is a three-dimensional porous material with repeated arrays of metal blocks and organic ligands to be fabricated.

The MOF has micropores and mesopores of various sizes and has been used as a gas storage medium because of its very wide specific surface area. In addition, the MOF was not used electrochemically due to the problem of poor conductivity, but recently, nano-sized MOFs were synthesized and used for electrochemical purposes, and thus the utilization of metal organic frameworks is increasing.

In addition, the MOF can have a wide variety of combinations of metal structures and organic ligands, so it can be implemented with thousands of crystal structures, and can contain various functional groups, and thus is very useful in terms of utilization.

Such MOF can be prepared as a porous carbon structure having a high specific surface area and large porosity through a carbonization process by heat treatment.

However, even the porous carbon structure, which has a high specific surface area and large porosity, has limitations in improving energy efficiency when applied to energy devices. Accordingly, it is necessary to develop a porous carbon structure that can improve energy efficiency by improving the reactivity of energy devices.

### [Prior Art Documents]

### [Patent Documents]

(Patent Document 1) Korean Patent Publication No. 2020-0021214
(Patent Document 2) Korean Patent Publication No. 2012-0063925

Advanced Functional Materials, vol. 30, no. 50, discloses a porous carbon structure having a core shell structure comprising a core made of a MOF (ZIF8) and a shell of ZIF67.

KR 20210001662 A discloses that porosity and specific surface area have an impact on the electrical properties of porous materials in view of their use as electrode materials.

Chemical Communications, No. 41, page 6162, discloses microporous core-shell architectures (MOFs).

### [Disclosure]

### [Technical Problem]

Therefore, the present disclosure intends to provide a porous carbon structure that is a support for sulfur contained in a positive electrode active material for a lithium-sulfur secondary battery, which is capable of supplementing sulfur insulation and thus improving electrical conductivity and inhibiting polysulfide leaching from the positive electrode.

Therefore, it is an object of the present disclosure to provide a porous carbon structure comprising the MOF having a core-shell structure and a method for preparing the same.

In addition, it is another object of the present disclosure to provide a lithium secondary battery comprising the porous carbon structure.

### [Technical Solution]

In order to achieve the above objects, the present disclosure provides a porous carbon structure having a core-shell structure, wherein the core comprises a first MOF (metal organic framework), and the shell comprises a second MOF, wherein the second MOF is doped with a hetero element comprising at least one of N and S, the porous carbon structure being obtained by a method comprising the steps of
(S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours;
(S2) adding a second organic ligand containing at least one of N and S to the mixed solution and heating to form a MOF having a core-shell structure, wherein heating is performed at 35 to 100 °C for 15 minutes to 25 hours; and
(S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate·hexahydrate (Zn(NO₃)₂·6H₂O), zinc acetate·dihydrate (Zn(CH₃CO₂)₂·2H₂O) and zinc sulfate ·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

The present disclosure also provides a method for preparing a porous carbon structure comprising the steps of (S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours; (S2) adding a second organic ligand containing at least one of N and S to the mixed solution and heating to form a MOF having a core-shell structure, wherein heating is performed at 35 to 100 °C for 15 minutes to 25 hours; and (S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate ·hexahydrate (Zn(NO₃)₂·6H₂O), zinc acetate·dihydrate (Zn(CH₃CO₂)₂·2H₂O) and zinc sulfate ·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

According to the invention is also a positive electrode comprising the porous carbon structure according to claim 5 and a lithium secondary battery according to claim 7.

Further embodiments are disclosed in the dependent claims.

### [Advantageous Effects]

The porous carbon structure according to the present disclosure has a core-shell structure, wherein the core and the shell comprise MOFs having different pore structures, respectively, and thus when applied as a sulfur carrier of a positive electrode for a lithium-sulfur secondary battery, can physically prevent the polysulfide generated from the positive electrode from leaching into the electrolyte solution.

In addition, in the porous carbon structure having the core-shell structure, since the shell includes a hetero element such as N or S, when applied as a sulfur carrier of a positive electrode for a lithium-sulfur secondary battery, polysulfide generated in the positive electrode is physically or chemically adsorbed well by the hetero element, and thus it can prevent the polysulfide from leaching into the electrolyte solution.

### [Description of Drawings]

FIG. 1 is a schematic diagram showing a process of forming a MOF having a core-shell structure in the method for preparing a MOF according to the present disclosure.
FIG. 2 is a scanning electron microscope (SEM) photograph of the MOFs prepared in Examples 1 and 2 and Comparative Example 1, respectively.
FIG. 3 is a graph (2-theta-scale) of the results of a XRD (X-ray diffraction) analysis of the porous carbon structures prepared in Example 1 and Comparative Examples 1, 2, and 3, respectively.
FIG. 4 is an optical microscope photograph of the porous carbon structures prepared in Examples 1 and 2 and Comparative Examples 1, 2 and 3, respectively.
FIG. 5 is a graph showing the results of a Fourier-transform infrared spectroscopy (FT-IR) analysis of the MOFs prepared in Example 1 and Comparative Example 1, respectively, and their raw materials.
FIG. 6 shows the results of a Focused Ion Beam-Energy Dispersive X-ray Spectrometer (FIB-EDS) measurement for the MOF prepared in Example 1.
FIG. 7 shows the results of a Scanning Electron Microscope-Energy Dispersive X-ray Spectrometer (SEM-EDS) measurement of the porous carbon structure prepared in Example 2.
FIGs. 8a and 8b show the results of X-ray photoelectron spectroscopy (XPS) measurements for the porous carbon structures prepared in Example 1 and Example 2, respectively.
FIGs. 9a to 9c are graphs showing the results of BET analysis for the porous carbon structures prepared in Examples and Comparative Examples, respectively.
FIG. 10 is a graph showing the electrochemical performance of a lithium-sulfur secondary battery that varies depending on the porous carbon structure material contained in the positive electrode.
FIGs. 11a and 11b are graphs showing the capacity of the batteries including Example 1 and Comparative Example 1 after 1 cycle and 30 cycles.
FIG. 12a is a graph showing the change in NMR peaks depending on the synthesis time of the porous carbon structure of Example 1, and FIG. 12b is a graph showing the change in NMR peaks of Example 1 and Comparative Examples 1, 2, and 3.
FIG. 13 is a photograph showing the results of measurement of contact angles of electrodes comprising the porous carbon structures of Example 1 and Comparative Example 1.

### [Best Mode]

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

As used herein, the term "hierarchical structure" refers to a structure in which a shell is formed in the form of a separate layer on a core in a porous carbon structure having a core-shell structure. In this case, the shell may be wholly or partially formed on the core.

### Porous carbon structure

The present disclosure relates to a porous carbon structure having a core-shell structure, wherein the core comprises a first metal organic framework (MOF), and the shell includes a second MOF, and wherein the second MOF is doped with a hetero element comprising at least one of N and S, the porous carbon structure being obtained by a method comprising the steps of
(S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours;
(S2) adding a second organic ligand containing at least one of N and S to the mixed solution and heating to form a MOF having a core-shell structure, wherein heating is performed at 35 to 100 °C for 15 minutes to 25 hours; and
(S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate·hexahydrate (Zn(NO₃)₂·6H₂O), zinc acetate·dihydrate (Zn(CH₃CO₂)₂·2H₂O) and zinc sulfate ·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

The first MOF and the second MOF have different pore structures and elemental compositions, and the second MOF forms a layer on all or part of the surface of the first MOF, so that a porous carbon structure having a core-shell structure may be formed. In this case, the pore structure may mean the pore volume and the size of the pores.

Specifically, the shell differs from the core in that it is doped with a hetero atom and that micro-pores are developed (micro-pore dominant). Through this structure, the leaching of LiPS may be suppressed chemically (hetero atom doping) and physically (micropores) during operation of a lithium secondary battery such as a lithium-sulfur secondary battery.

For example, the specific surface area of the first MOF may be 1700 to 2000 m²/g, and the pore volume may be 1.9 to 2.5 cc/g, and the specific surface area of the second MOF may be 900 to 1300 m²/g, and the pore volume may be 0.8 to 1.0 cc/g.

In the present disclosure, the porous carbon structure may have different pore volume and specific surface area depending on the type of hetero element doped to the second MOF of the shell. For example, if the hetero element is N, micropores are developed in the porous carbon structure, so that the specific surface area is increased, and the pore volume may be somewhat decreased. On the other hand, if the hetero element is S, mesopores together with micropores are developed in the porous carbon structure, so that both the specific surface area and the pore volume may be increased. The diameters of the micropores and the mesopores are not particularly limited, but the diameters of the micropores may be 1 nm or more and less than 5 nm, and the diameters of the mesopores may be 5 nm to 10 nm.

In the present disclosure, the pore volume of the porous carbon structure is not particularly limited, but as the pore volume is increased, it may be suitable as a positive electrode material for a lithium secondary battery. For example, when the porous carbon structure is applied as a positive electrode material for a lithium secondary battery, as the pore volume of the porous carbon structure is increased, it is possible to impregnate more sulfur (S8) contained in the positive electrode active material and to prevent damage to the structure of the positive electrode bath due to volume expansion occurring during the mutual conversion of sulfur (S8) and lithium polysulfide (LiPS).

Accordingly, when the porous carbon structure is applied to a positive electrode material for a lithium secondary battery to function as a sulfur carrier, the pore volume of the porous carbon structure may be 1.5 cc/g to 4.5 cc/g, and specifically 1.5 cc/g or more, 2.0 cc/g or more or 2.5 cc/g or more, and 3.5 cc/g or less, 4.0 cc/g or less or 4.5 cc/g or less.

The pore volume of the porous carbon structure may also vary depending on the type of hetero element. For example, if the hetero element comprised in the porous carbon structure is N, the porous carbon structure may comprise micropores.

In the present disclosure, the specific surface area of the porous carbon structure is not particularly limited, but as the specific surface area is increased, a site for oxidation-reduction reaction between Li ions and sulfur can be sufficiently provided, so that the electrochemical reaction can be smoothly performed during charging and discharging of the lithium secondary battery.

Accordingly, the specific surface area of the porous carbon structure may be 1500 to 3000 m²/g, and specifically, 1500 m²/g or more, or 1800 m²/g or more, and 2500 m²/g or less, or 3000 m²/g or less. If the specific surface area of the porous carbon structure is less than 1500 m²/g, the active material cannot be sufficiently supported. If the specific surface area of the porous carbon structure exceeds 3000 m²/g, more process time and cost than necessary may occur in order to achieve the specific surface area.

In the present disclosure, the porous carbon structure comprises metal ions and organic ligands as components constituting the framework of the first MOF and the second MOF.

In addition, the molar ratio of the metal ion and the organic ligand contained in the MOF may be 1:0.2 to 5, preferably 1:0.3 to 4.5, more preferably 1:0.5 to 4. If the molar ratio of the organic ligand to the metal ion is less than the above range, the porosity may be decreased. If the molar ratio of the organic ligand to the metal ion exceeds the above range, the size of the pores may be reduced.

### Method for preparing porous carbon structure

The present disclosure also provides a method for preparing a porous carbon structure comprising the steps of (S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours; (S2) adding a second organic ligand containing at least one of N and S to the mixed solution and heating to form a MOF having a core-shell structure, wherein heating is performed at 35 to 100 °C for 15 minutes to 25 hours; and (S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate ·hexahydrate (Zn(NO₃)₂·6H₂O), zinc acetate·dihydrate (Zn(CH₃CO₂)₂·2H₂O) and zinc sulfate·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

Hereinafter, the method of preparing the porous carbon structure according to the present disclosure will be described in more detail for each step.

In the present disclosure, in step (S1), the MOF can be formed by heating the mixed solution obtained by dissolving the metal structure and first organic ligand structure in the organic solvent.

The reaction conditions for forming the MOF are heating at a temperature of 100 to 150°C for 6 to 40 hours

If the reaction temperature is less than 100 °C, it is difficult to initiate the crystal formation reaction, and thus the MOF may also not be formed. If the reaction temperature exceeds 150°C, the MOF may be formed.

In addition, if the reaction time is less than 6 hours, the reaction is terminated in a state in which the intermediate product is formed, or the reaction is terminated in a mixed state of the MOF and the intermediate product. If the reaction time exceeds 40 hours, the time required for the process may be too long, thereby reducing process efficiency.

The metal structure comprises a zinc structure, and the zinc structure comprises at least one selected from the group consisting of zinc nitrate ·hexahydrate (Zn(NO₃)₂·6H₂O), zinc acetate·dihydrate (Zn(CH₃CO₂)₂·2H₂O) and zinc sulfate·hexahydrate (ZnSO₄·6H₂O).

In addition, the first organic ligand structure may comprise at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, preferably 1,4-benzenedicarboxylic acid.

In addition, the organic solvent may comprise at least one selected from the group consisting of dimethyl carbonate, dimethyl formamide (DMF), N-methyl formamide, sulfolane (tetrahydrothiophene-1,1-dioxide), 3-methylsulfolan, N-butyl sulfone, dimethyl sulfoxide, pyrrolidinone(HEP), dimethylpiperidone(DMPD), N-methyl pyrrolidinone (NMP), N-methylacetamide, dimethylacetamide (DMAc), N,N-dimethylformamide (DMF), diethylacetamide (DEAc), dipropylacetamide (DPAc), ethanol, propanol, butanol, hexanol, ethylene glycol, tetrachloroethylene, propylene glycol, toluene, tripentine, methyl acetate, ethyl acetate, petroleum ether, acetone, cresol and glycerol, preferably, dimethyl formamide (DMF).

In the present disclosure, in step (S2), the second organic ligand structure containing at least one of N and S is added to the mixed solution, in which the MOF is formed, and heated to form a MOF having a core-shell structure. In this case, the second organic ligand may be used in a state of a solution dissolved in an organic solvent. The organic solvent may be the same or different within the range of the type of the organic solvent used in step (S1).

The reaction condition for the synthesis of the MOF having the core-shell structure is heating at 35 °C to 100 °C for 15 to 25 hours. If the reaction temperature or time is less than such reaction temperature or time, the ligand exchange reaction rate is too slow. If the reaction temperature or time is in excess of such reaction temperature or time, the crystallinity may be destroyed by heat.

The synthesized MOF may be carried in the second organic ligand structure solution, so that the reaction can be proceeded. In this case, the synthesized MOF may be carried in the second organic ligand solution in a crystalline state after washing, activation and drying. In the second organic ligand structure solution carrying the MOF, a solvent-assisted ligand exchange reaction occurs, so that the surface of the MOF is doped with at least one of N and S, which are hetero elements and are contained in the second organic ligand structure.

In this case, the inside of the MOF not doped with the hetero element in the MOF may be referred to as a first MOF, and the surface portion doped with the hetero element may be classified as a second MOF. In addition, the first MOF is called a core, and the second MOF is called a shell, and thus MOFs having a core-shell structure can be formed.

In general, the solvent-assisted ligand exchange reaction is a reaction in which the ligand solution and a parent ligand of the parent MOF and a daughter ligand are exchanged, and a daughter MOF maintaining the topology of the parent MOF is obtained. At this time, all parent MOFs are converted into daughter MOFs depending on the control of reaction conditions (e.g., temperature, concentration, crystal size, etc.) and the characteristics of daughter ligands, or they are sequentially converted from the surface of the parent MOF to the daughter MOF to form a core-shell structure. In the exchange of ligands, ΔG associated with the linker exchange process converges to zero (0), which can be considered as equilibrium.

According to one embodiment of the present disclosure, the parent ligand is terephthalic acid and the daughter ligand is 2-amino terephthalic acid, and during the exchange process, the parent MOF is not completely converted to the daughter MOF due to the steric hinderance of the amine group present in 2-amino terephthalic acid, and thus a core-shell structure is formed.

The ligand exchange can be confirmed by the change in crystal color, yellow border on OM, FT-IR, FIB-EDS, NMR, etc., and the conversion rate can be determined through a NMR analysis.

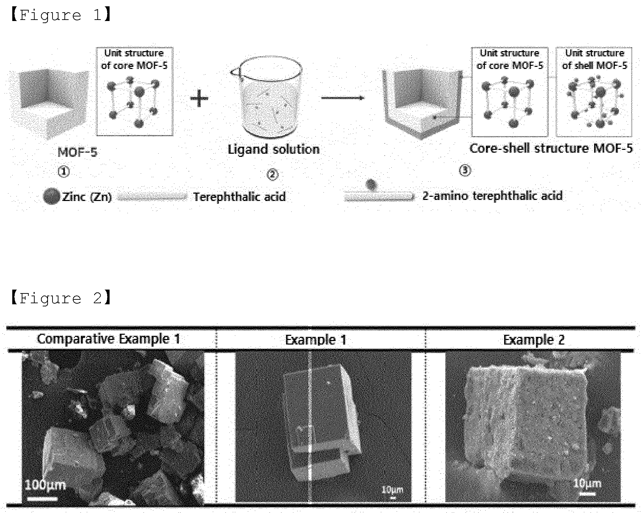

FIG. 1 is a schematic diagram showing a process of forming a MOF having a core-shell structure in the method for preparing a MOF according to the present disclosure.

Referring to FIG. 1, ① shows a schematic diagram of the MOF formed in step (S1). ② shows a schematic diagram of the initial MOF, in which the surface of the MOF begins to be doped with N while the solvent-assisted ligand exchange reaction between the MOF and the second organic ligand structure is started in step (S2). ③ is a schematic diagram of the MOF of the core-shell structure divided into the first MOF and the second MOF, in which the solvent-assisted ligand exchange reaction is completed, and the surface of the MOF is doped with a hetero element. At this time, the second MOF forming the shell is doped with a hetero element.

The second organic ligand structure comprises one or more of N and S.

The second organic ligand structure comprising N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid.

The second organic ligand structure containing S comprises at least one selected from the group consisting of 2,5-disulfanylterephthalic acid, (H₄(C₈H₂O₄S₂)), 2-sulfanylterephthalic acid and 2,5-thiophenedicarboxylic acid.

In the present disclosure, in step (S3), the MOF of the core-shell structure formed in step (S2) is heat-treated and carbonized to prepare a porous carbon structure.

The heat treatment is performed under an inert atmosphere. The inert atmosphere may be formed by nitrogen gas, argon gas, helium gas, krypton gas, or xenon gas, preferably argon gas,
The heat treatment temperature is 900 °C to 1500 °C, specifically, 900 °C or higher, 950 °C or higher, or 1000 °C or higher, and 1100 °C or lower, 1300 °C or lower, or 1500 °C or lower. If the heat treatment temperature is less than 900 °C, the Zn metal in the MOF may not be sufficiently removed. If the heat treatment temperature exceeds 1500 °C, since a lot of time and energy required for the process is required, the process efficiency may be reduced.

The heat treatment time may be 6 hours to 24 hours, specifically 6 hours or more, 7 hours or more, or 8 hours or more, and 22 hours or less, 23 hours or less, or 24 hours or less. If the heat treatment time is less than 6 hours, carbonization is not sufficient, so it may be difficult to secure a sufficient specific surface area and pore volume necessary for the electrochemical reaction. If the heat treatment time exceeds 24 hours, the process efficiency may be reduced because a lot of time and energy required for the process are required.

### Lithium secondary battery

The present disclosure also relates to a lithium secondary battery comprising a positive electrode, a negative electrode, a separator interposed therebetween, and an electrolyte solution, wherein the porous carbon structure as described above is comprised as a positive electrode material.

Specifically, when using a sulfur-containing material as a positive electrode active material, the porous carbon structure can be applied as a sulfur carrier. As such, a battery comprising a sulfur-containing material as a positive electrode active material may be referred to as a lithium-sulfur secondary battery.

In the present disclosure, the positive electrode of the lithium secondary battery may comprise a positive electrode current collector, and a positive electrode mixture layer having a positive electrode active material formed on the positive electrode current collector.

The positive electrode active material may comprise elemental sulfur (S₈), a sulfur-based compound, or a mixture thereof. The sulfur-based compound may specifically comprise Li₂Sₙ(n≥1), an organic sulfur compound or a carbon-sulfur polymer ((C₂Sₓ)ₙ: x=2.5~50, n≥2). In the case of these sulfur materials, since they do not have electrical conductivity alone, they may also be used in the positive electrode of a lithium secondary battery in the form of a sulfur-carbon composite formed by complexing with a carbon material.

In addition, the positive electrode active material may further comprise a lithium-containing transition metal oxide, and the lithium-containing transition metal oxide may be any one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂, LiCo_{1-y}Mn_{y}O₂, LiNi_{1-y}Mn_{y}O₂(0≤y<1), Li(NiₐCo_{b}Mn_{c})O₄(0<a<2, 0<b<2, 0<c<2, a+b+c=2), LiMn_{2-z}Ni_{z}O₄, LiMn_{2-z}Co_{z}O₄(0<z<2), LiCoPO₄ and LiFePO₄ or a mixture of two or more thereof. Also, in addition to these oxides, sulfides, selenides, halides and the like can also be used.

In addition, the positive electrode current collector is not particularly limited as long as it has a high electrical conductivity without causing chemical changes in the relevant battery, and for example, stainless steel, aluminum, nickel, titanium, sintered carbon, or aluminum or stainless steel surface-treated with carbon, nickel, titanium, silver or the like may be used. In this case, the positive electrode current collector may be formed in various forms such as film, sheet, foil, net, porous body, foam, or nonwoven fabric having fine irregularities formed on its surface in order to enhance the bonding force with the positive electrode active material.

In the present disclosure, the negative electrode of the lithium secondary battery may comprise a negative electrode current collector, and a negative electrode mixture layer having a negative electrode active material formed on the negative electrode current collector.

As the negative electrode active material, a carbon material, lithium metal, silicon, tin, or the like, in which lithium ions may be intercalated and deintercalated, may be used. Preferably, a carbon material may be used, and as the carbon material, both low crystalline carbon and high crystalline carbon may be used. As the low crystalline carbon, soft carbon and hard carbon are typical. As the high crystalline carbon, high temperature sintered carbon such as natural graphite, Kish graphite, pyrolytic carbon, mesophase pitch based carbon fiber, meso-carbon microbeads, mesophase pitches and petroleum or coal tar pitch derived cokes are typical. In this case, the negative electrode may comprise a binder. The binder may be various kinds of binder polymers such as vinylidenefluoride-hexafluoropropylene copolymer (PVDF-co-HFP), polyvinylidenefluoride, polyacrylonitrile, and polymethylmethacrylate.

In addition, the negative electrode current collector is not particularly limited as long as it has an electrical conductivity without causing chemical changes in the relevant battery, and for example, copper, stainless steel, aluminum, nickel, titanium, sintered carbon, or copper, or stainless steel surface-treated with carbon, nickel, titanium, silver or the like, or aluminum-cadmium alloy may be used. In addition, the negative electrode current collector may be formed in various forms such as film, sheet, foil, net, porous body, foam, or nonwoven fabric, having fine irregularities formed on its surface like the positive electrode current collector.

At this time, the positive electrode mixture layer or negative electrode mixture layer may further comprise a binder resin, an electrically conductive material, a filler, and other additives.

The binder resin is used for the bonding of the electrode active material and the electrically conductive material and for the bonding to the current collector. Examples of such binder resin may comprise polyvinylidene fluoride (PVDF), polyvinyl alcohol, carboxymethylcellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated-EPDM, styrene-butadiene rubber, fluorine rubber, and various copolymers thereof.

The electrically conductive material is used to further improve the electrical conductivity of the electrode active material. The electrically conductive material is not particularly limited as long as it has electrical conductivity without causing chemical changes in the relevant battery, and for example, graphite such as natural graphite or artificial graphite; carbon blacks such as carbon black, acetylene black, Ketjen black, channel black, furnace black, lamp black, and thermal black; electrically conductive fibers such as carbon fiber and metal fiber; metal powders such as carbon fluoride, aluminum and nickel powder; electrically conductive whiskers such as zinc oxide and potassium titanate; electrically conductive metal oxides such as titanium oxide; polyphenylene derivative can be used.

The filler is selectively used as a component for suppressing the expansion of the electrode and is not specifically limited as long as it is a fibrous material without causing chemical change in the relevant battery, and for example, comprises olefin-based polymers such as polyethylene and polypropylene; and fibrous materials such as glass fiber and carbon fiber.

In the present disclosure, the separator is a physical separator having a function of physically separating the electrodes, and can be used without particular limitation as long as it is used as a separator in the conventional lithium secondary battery, and particularly, a separator with low resistance to ion migration in the electrolyte and excellent impregnating ability for the electrolyte is preferable. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. may be used alone or in a laminate thereof, or a conventional porous nonwoven fabric, for example, a nonwoven fabric made of glass fiber, polyethyleneterephthalate fiber or the like with high melting point can be used, but are not limited thereto.

In the present disclosure, the electrolyte solution may be a non-aqueous electrolyte solution, and the electrolyte salt contained in the non-aqueous electrolyte solution is a lithium salt. The lithium salt may be used without limitation as long as it is commonly used in an electrolyte solution for a lithium secondary battery. For example, the lithium salt may be at least one selected from the group consisting of LiFSI, LiPF₆, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₆, LiAlCl₄, CH₃SO₃Li, CF₃SO₃Li, (CF₃SO₂)₂NLi, lithium chloroborane, and lithium 4-phenyl borate.

As the organic solvent contained in the non-aqueous electrolyte solution, the organic solvents commonly used in an electrolyte solution for a lithium secondary battery may be used without limitation, and for example, ethers, esters, amides, linear carbonates, cyclic carbonates, etc. may be used alone or in combination of two or more thereof. Among them, carbonate compounds which are representatively cyclic carbonates, linear carbonates, or a slurry thereof may be comprised.

Specific examples of the cyclic carbonate compound may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a slurry of two or more thereof. Examples of such halides comprise, but are not limited to, fluoroethylene carbonate (FEC) and the like.

In addition, specific examples of the linear carbonate compound may typically be, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a slurry of two or more thereof. In particular, ethylene carbonate and propylene carbonate, which are cyclic carbonates in the carbonate-based organic solvent, are highly viscous organic solvents having a high dielectric constant, so that the lithium salt in the electrolyte can be more easily dissociated. If such cyclic carbonates are mixed with linear carbonates having a low viscosity and a low dielectric constant, such as dimethyl carbonate and diethyl carbonate, in an appropriate ratio, an electrolyte solution having a higher electrical conductivity can be produced.

In addition, the ether among the organic solvents may be, but is not limited to, at least one selected from the group consisting of dimethyl ether, diethyl ether, dipropyl ether, methylethyl ether, methylpropyl ether, and ethylpropyl ether, or a slurry of two or more thereof.

In addition, the ester among the organic solvents may be, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, or a slurry of two or more thereof.

The injection of the non-aqueous electrolyte solution can be performed at an appropriate stage of the manufacturing process of the electrochemical device depending on the manufacturing process and required properties of the final product. That is, it can be applied before assembling the electrochemical device or in the final stage of assembling the electrochemical device.

In the case of the lithium secondary battery according to the present disclosure, it is possible to perform laminating or stacking and folding processes of the separator and the electrode, in addition to the winding process which is a general process.

In addition, the shape of the battery case is not particularly limited, and may be of various shapes such as a cylindrical shape, a laminate shape, a square shape, a pouch shape, or a coin shape. The structure and manufacturing method of these batteries are widely known in the art, and thus detailed description thereof will be omitted.

In addition, the lithium secondary battery may be classified into various batteries, such as a lithium-sulfur secondary battery, a lithium-air battery, a lithium-oxide battery, and a lithium all-solid battery, depending on the positive electrode/negative electrode material used.

In addition, the present disclosure provides a battery module comprising the lithium secondary battery as a unit cell.

The battery module may be used as a power source of medium or large-sized devices requiring high temperature stability, long cycle characteristics, high-capacity characteristics and the like.

Examples of the medium or large-sized devices may comprise, but are not limited to, a power tool that is powered and moved by an electric motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

Hereinafter, preferred examples of the present disclosure will be described in order to facilitate understanding of the present disclosure.

### Example 1

### (1) Preparation of MOF

0.8g (4.2mmol) of Zn(NO₃)₂·6H₂O 0.8g (4.2mmol) and 0.149 g (0.89 mmol) of 1,4-benzenedicarboxylic acid (H2BDC) was placed in a 50 mL container together with 30 mL of anhydrous DMF (N,N'-dimethylformamide. The reaction solution was heated in a box-type electric furnace at 120 °C for 1 day. The crystalline product was obtained through a pressure reducing device and filter paper, and washed several times with anhydrous DMF (N,N'-dimethylformamide) and anhydrous chloroform. The product was dried in a vacuum desiccator at room temperature.

The prepared MOF is MOF-5(Zn₄O(BDC)₃, BDC: 1,4-benzenedicarboxylate).

### (2) Formation of core-shell structure (MOF-5@N-MOF-5)

2-aminoterephthalic acid, which is an organic ligand structure containing N, was dissolved in DMF (N,N'-dimethylformamide) as an organic solvent to prepare an organic ligand structure solution of a concentration of 0.01 M.

After heating the organic ligand structure solution at 100 °C for 30 minutes, the MOF having a core-shell structure obtained was recovered and dried (MOF-5@N-MOF-5).

### (3) Carbonization

The MOF having the core-shell structure was heat-treated in an Ar atmosphere and 1000 °C for 6 hours to prepare a porous carbon structure (MOF-5@N-MOF-5).

### Example 2

A porous carbon structure was prepared in the same manner as in Example 1, except that 2,5-mercaptoterephthalic acid, which is an organic ligand structure containing element S, was used instead of 2-aminoterephthalic acid, which is an organic ligand structure containing element N (MOF-5@S-MOF-5).

### Comparative Example 1

The MOF-5 was carbonized in the same manner as in Example 1 to prepare a porous carbon, except that the core-shell structure was not formed (MOF-5).

### Comparative Example 2

The N-MOF-5 was carbonized in the same manner as in Example 1 to prepare a porous carbon, except that the core-shell structure was not formed (N-MOF-5).

### Comparative Example 3

A porous carbon was prepared in the same manner as in Example 1, except that the materials of the core and shell were reversed (N-MOF-5@MOF-5).

### Experimental Example 1

The shapes of the porous carbon structures prepared in Examples 1 and 2 and Comparative Example 1, respectively, were confirmed.

FIG. 2 is a scanning electron microscope (SEM) (FE-SEM; JEOL, JSM-7100F) photograph of the MOFs prepared in Examples 1 and 2 and Comparative Example 1, respectively.

Referring to FIG. 2, it can be seen that the porous carbon structures of Examples 1 and 2 and Comparative Example 1 are all cubes. In addition, in the case of Example 1 and Example 2, it can be seen that one more layer was further formed on the surface of the cubic shape, and from this, it can be seen that the core-shell shape was formed.

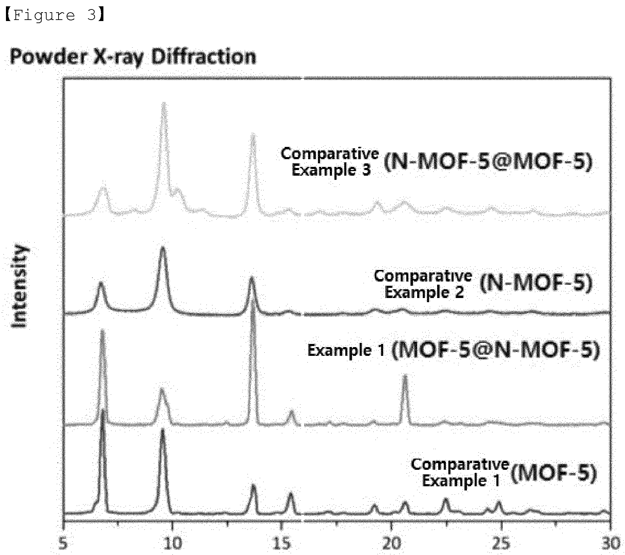

FIG. 3 is a graph (2-theta-scale) of the results of XRD (X-ray diffraction) analysis of the porous carbon structures prepared in Example 1 and Comparative Examples 1, 2, and 3, respectively.

Referring to FIG. 3, it can be seen that the main peaks (6.8°, 9.7°, 13.7°, 15.4°) of Comparative Example 1 (MOF-5) and Comparative Example 2 (N-MOF-5) are identical and the main peaks of Example 1 (MOF-5@N-MOF-5) and Comparative Example 2 (N-MOF-5@MOF-5) are also identical, indicating that the crystal structure of the existing MOF is preserved even after the ligand exchange reaction.

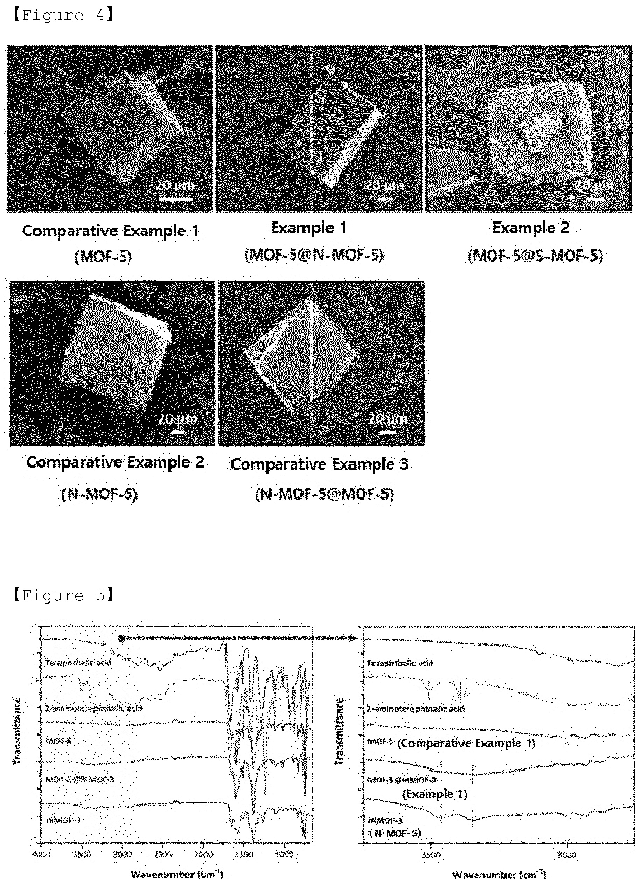

FIG. 4 is an optical microscope photograph of the porous carbon structures prepared in Examples 1 and 2 and Comparative Examples 1, 2 and 3, respectively.

Referring to FIG. 4, it can be seen that Example 1 (MOF-5@N-MOF-5), Example 2 (MOF-5@S-MOF-5), and Comparative Example 3 (N-MOF-5@MOF-5), which are the MOF forms of the core-shell structures after the ligand exchange reaction, retains the cube shapes of Comparative Example 1 (MOF-5) and Comparative Example 2 (N-MOF-5), which are the existing MOF forms.

FIG. 5 is a graph showing the results of a Fourier-transform infrared spectroscopy (FT-IR) analysis of the MOFs prepared in Example 1 and Comparative Example 1, respectively, and their raw materials.

Referring to FIG. 5, it can be seen that a core-shell structure is formed through the amide group of 2-aminoterephthalic acid, which is an organic ligand structure of N-MOF-5 (IRMOF-3) existing in Example 1 (MOF-5@N-MOF-5).

### Experimental Example 2

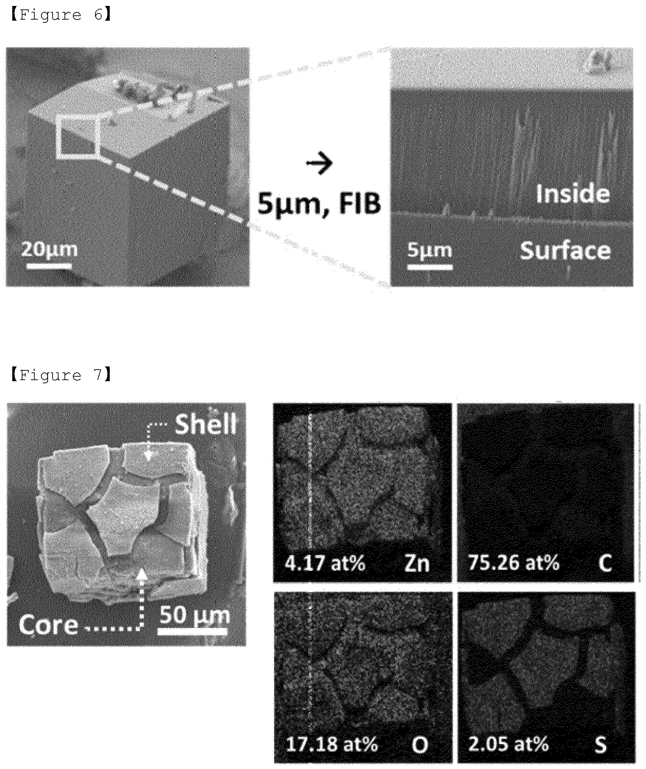

FIG. 6 shows the results of a Focused Ion Beam-Energy Dispersive X-ray Spectrometer (FIB-EDS) measurement for the MOF prepared in Example 1.

Referring to FIG. 6, it can be seen that in the MOF of Example 1, the inside and the surface are separated, and a core-shell structure is formed therefrom.

In addition, Table 1 below shows the results of elemental analysis of the surface of the core and the inside of the shell of the MOF of Example 1.

**Table 1:**

| Atom | C | N | O | Zn |
|---|---|---|---|---|
| Surface | 68.10 | 3.08 | 17.41 | 11.41 |
| Inside | 68.63 | 0 | 20.19 | 11.18 |

As shown in Table 1, it was confirmed that element N was detected only on the surface of the MOF, that is, the shell. From this, it can be seen that the porous carbon structure has a core-shell structure in which the constituent components of the core and the shell are also different.

FIG. 7 shows the results of a Scanning Electron Microscope-Energy Dispersive X-ray Spectrometer (SEM-EDS) (FE-SEM; JEOL, JSM-7100F) measurement of the MOF prepared in Example 2.

Referring to FIG. 7, it can be confirmed that the porous carbon structure of Example 2 has a core-shell structure in which a shell is formed on the surface of a cubic-shaped core. In addition, S was observed only in the shell, indicating that the components of the core and the shell were different. From this, it can be seen that the MOF having a core-shell structure was formed. The shell is observed in a broken shape, and as the S element is distributed along the broken part, it can be seen that a shell made of a different component than the core is formed.

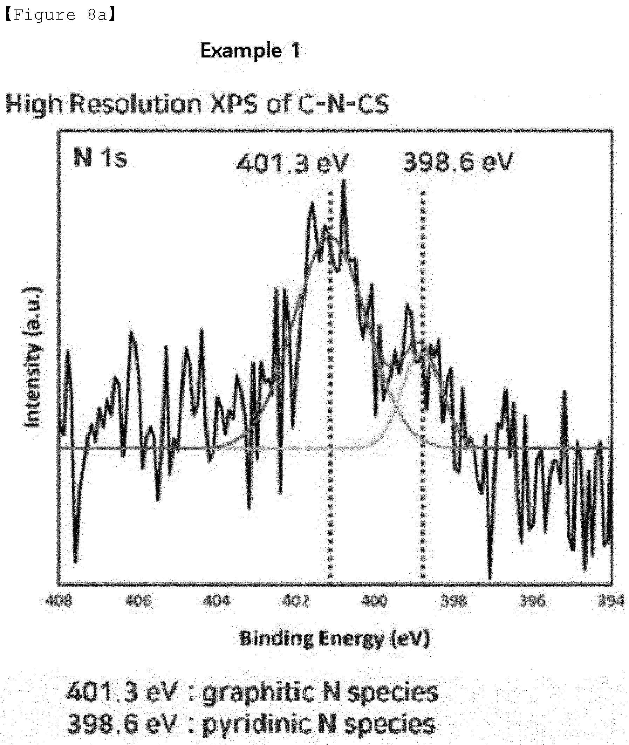

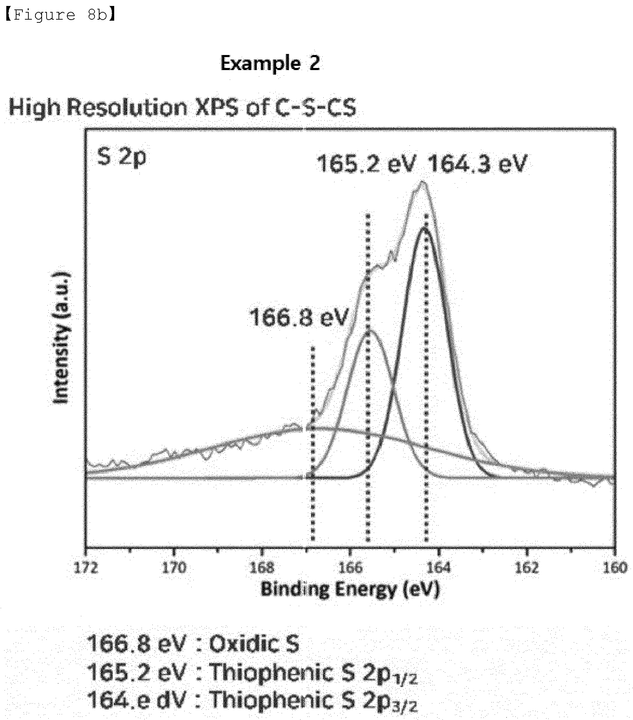

FIGs. 8a and 8b show the results of X-ray photoelectron spectroscopy (XPS) (Thermo U.K., K-alpha) measurements for the porous carbon structures prepared in Example 1 and Example 2, respectively.

Referring to FIGs. 8a and 8b, it can be seen that the bidding energy of N and S, which are hetero elements, can be confirmed, and from this, it can be seen that they are well doped.

In addition, Table 2 below shows the analysis results of the components of the porous carbon structures prepared in Examples 1 and 2 and Comparative Example 1, respectively.

**Table 2:**

| | C | O | N | S |
|---|---|---|---|---|
| Comparative Example 1 | 97 | 2.5 | 0.5 | - |
| Example 1 | 91.9 | 6.9 | 1.0 | 0.3 |
| Example 2 | 95.4 | 1.8 | 0.7 | 2.1 |

As shown in Table 2 above, it can be confirmed that in Example 1 and Example 2, since 2-aminoterephthalic acid containing N and 2,5-dimercaptoterephthalic acid containing S were used as an organic ligand structure, respectively, the content of N and S was also high in the analysis results of the components, respectively.

### Experimental Example 3

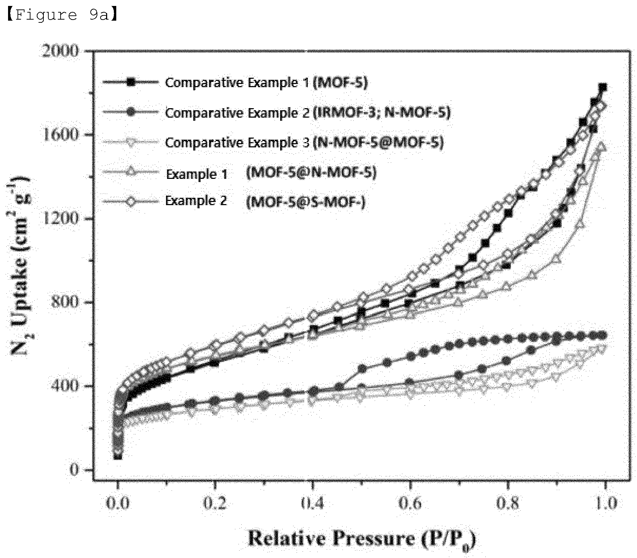

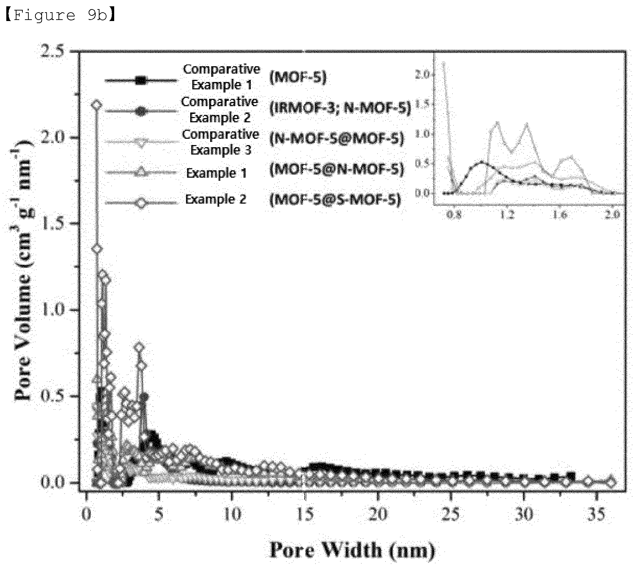

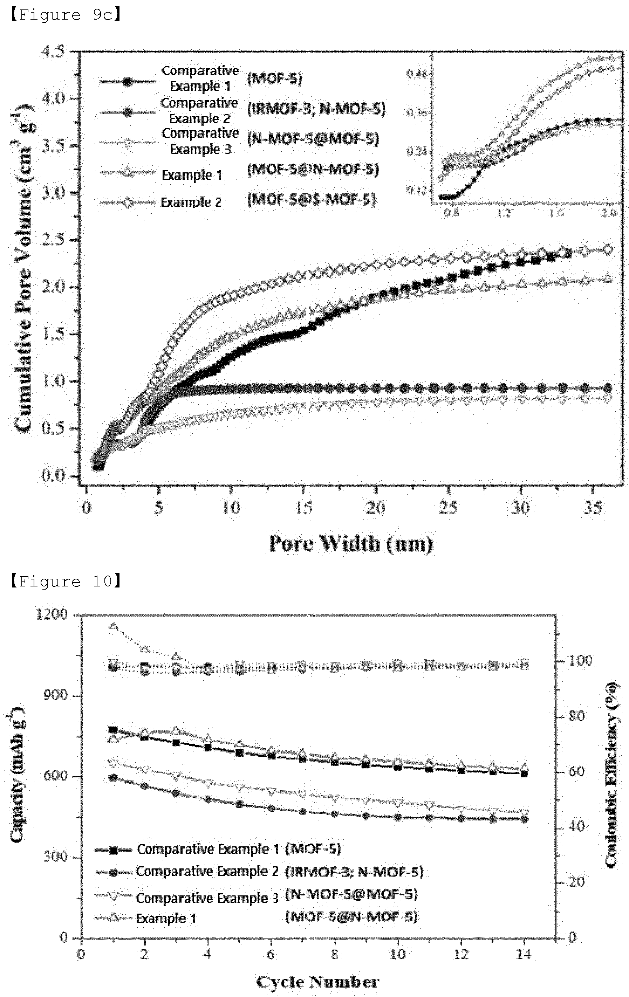

FIGs. 9a to 9c are graphs showing the results of BET analysis for the porous carbon structures prepared in Examples and Comparative Examples, respectively.

Referring to FIGs. 9a to 9c, it can be seen that in Example 1 and Example 2, as the hetero atoms are doped into the outer shell of the hierarchical porous carbon structure, micropores develop, and then as the micropores develop, the specific surface area and pore volume of the porous carbon structure are increased compared to Comparative Example 1.

On the other hand, it can be seen that compared to Comparative Example 2 and Example 1, which are not hierarchical porous carbon structures, Comparative Example 3, in which the materials of the core and the shell were reversely formed, has significantly reduced pore volume and specific surface area compared to Comparative Example 1.

The pore volumes and specific surface areas of the porous carbon structures of Examples 1 and 2 and Comparative Examples 1 to 3 are as shown in Table 3 below.

**Table 3:**

| | | Pore volume (cc/g) | Specific surface area (m²/g) |
|---|---|---|---|
| Comparative Example 1 | MOF-5 | 2.36 | 1843 |
| Example 1 | MOF-5@N-MOF-5 | 2.09 | 1938.69 |
| Example 2 | MOF-5@S-MOF-5 | 2.40 | 2076.06 |
| Comparative Example 2 | N-MOF-5 | 0.97 | 179.51 |
| Comparative Example 3 | N-MOF-5@MOF-5 | 0.82 | 1053.55 |

### Experimental Example 4

The electrochemical performance of the lithium-sulfur secondary batteries depending on the type of porous carbon structure used as a positive electrode material was evaluated.

As the subject of electrochemical performance evaluation, lithium-sulfur secondary batteries were manufactured as follows.

The separator was placed between the positive electrode and the negative electrode and thus placed inside the case, and then the electrolyte solution was injected into the case to prepare a lithium-sulfur secondary battery in the form of a CR-2032 coin cell. At this time, the positive electrode is prepared by coating a slurry for a positive electrode, which was formed by mixing a positive electrode active material, an electrically conductive material (Super P) and a binder (styrene-butadiene rubber, SBR) in a weight ratio of 80:10:10, on Al foil, and drying and rolling them. The positive electrode active material is a sulfur-carbon composite obtained by mixing sulfur (product from Sigma-Aldrich) with a porous carbon structure using a ball mill and then heat-treating them at 155 °C (S loading: 70%).

As the negative electrode, a lithium foil was used.

The electrolyte solution was obtained by dissolving 0.3 M LiNO₃ and 1M LiTFSi in a mixed solvent of DOL and DME (DOL:DME=1:1 (v/v)) (DOL: Dioxolane, DME: Dimethoxyethane).

At this time, as the porous carbon structure, the porous carbon structures of Example 1 and Comparative Examples 1, 2 and 3 were used, respectively.

### Experimental Example 4-1

After charging and discharging the prepared lithium-sulfur secondary batteries under 0.1C conditions, the initial capacity and the discharging capacity at 14 cycles were measured, and the performance retention rate was calculated, and the results are shown in Table 4 and FIG. 10 below.

**Table 4**

| | | Initial capacity (mAh·g⁻¹) | Discharging capacity at 14 cycles (mAh·g⁻¹) (performance retention rate, %) |
|---|---|---|---|
| Example 1 | MOF-5@N-MOF-5 | 740.07 | 631.26 (85%) |
| Comparative Example 1 | MOF-5 | 773.15 | 611.35(79%) |
| Comparative Example 2 | N-MOF-5 | 594.78 | 442.35 (74%) |
| Comparative Example 3 | N-MOF-5@MOF-5 | 650.95 | 468.51 (72%) |

As a result, it was found that the electrochemical performance of the lithium-sulfur secondary battery containing the porous carbon structure of Example 1 is the best, and it can be seen that this is due to the fact that the porous carbon structure of Example 1 has a hierarchical core-shell structure, and in particular, micropores are developed in the shell and the shell is doped with hetero elements.

### Experimental Example 4-2

After charging and discharging the prepared lithium-sulfur secondary battery under 0.1C conditions, the capacities after 1 cycle and 30 cycles were compared.

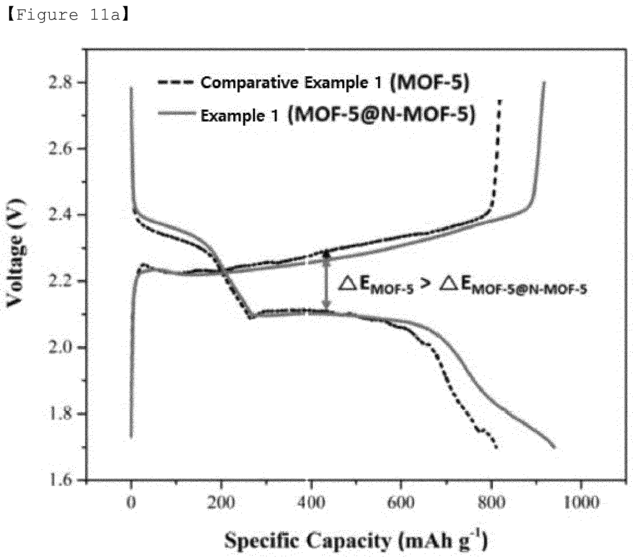

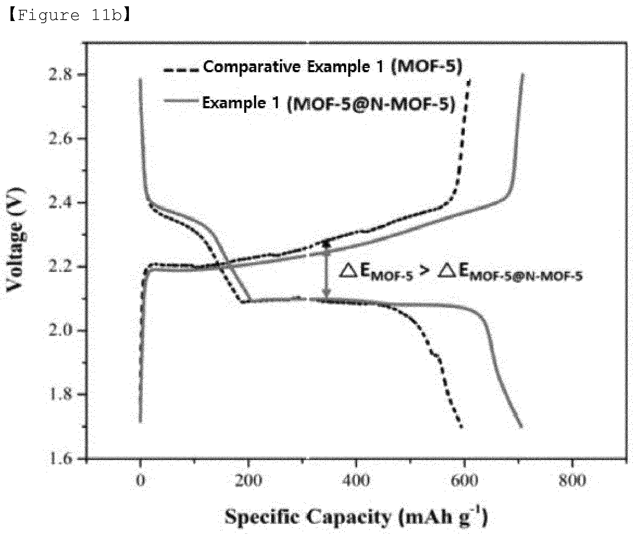

FIGs. 11a and 11b are graphs showing the capacity of the batteries including Example 1 and Comparative Example 1 after 1 cycle and 30 cycles.

Referring to FIGs. 11a and 11b, Example 1 (MOF-5@N-MOF-5) shows improved initial discharging capacity than Comparative Example 1 (MOF-5) (initial capacity, Example 1: 939.96 mAh·g⁻¹, Comparative Example 1: 810.66 mAh·g⁻¹).

In addition, the discharging capacity was higher in Example 1 even after 30 cycles, which indicates improved performance retention rate (discharging capacity after 30 cycles, Example 1: 705.62 mAh·g⁻¹ (75% performance retention rate), Comparative Example 1: 810.66 mAh·g⁻¹ (73% performance retention rate)).

It was confirmed that the degree of electrode polarization was lower in Example 1.

### Experimental Example 5

NMR peaks of the porous carbon structures synthesized in Examples and Comparative Examples were confirmed.

The synthesized porous carbon structure crystals were dissolved in 1M sodium deuteroxide (NaOD) solution and NMR of organic ligand was measured.

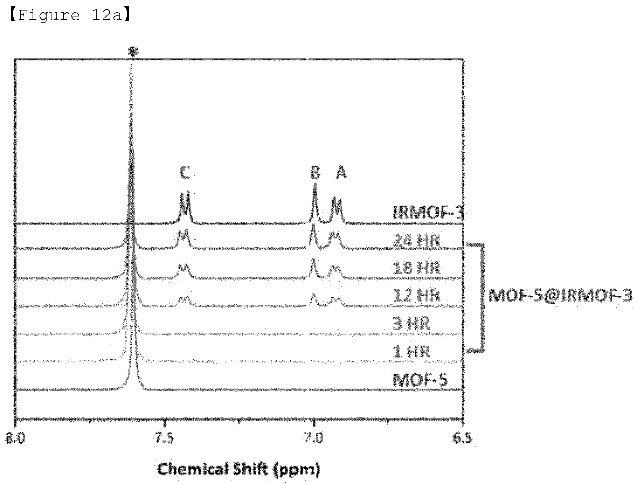

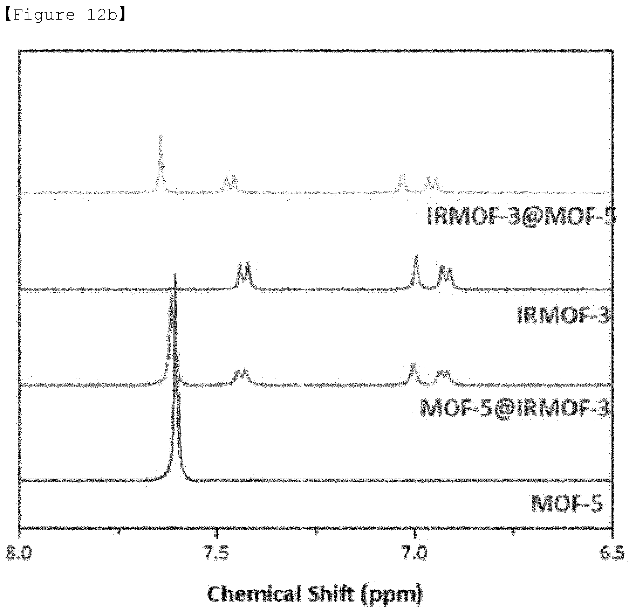

FIG. 12a is a graph showing the change in NMR peaks depending on the synthesis time of the porous carbon structure of Example 1, and FIG. 12b is a graph showing the change in NMR peaks of Example 1 and Comparative Examples 1, 2, and 3.

Referring to FIG. 12a, the H1 peak (*) in the BDC benzene ring of MOF-5 was still maintained in the porous carbon structure (MOF-5@N-MOF-5) of Example 1, and was not found in N-MOF-5 using BDC-NH₂ as an organic ligand.

In addition, it was confirmed that in the case of MOF-5@N-MOF-5, as the ligand exchange reaction time is increased, the H1 main peaks (A, B, C) of the BDC-NH₂ organic ligand of MOF-5@N-MOF-5 are shown, and their size are increased.

Referring to FIG. 12b, in the case of Example 1 (MOF-5@N-MOF-5) and Comparative Example 3 (N-MOF-5@ MOF-5), both the main peaks (*, A, B, C) of Comparative Example 1 (MOF-5) and Comparative Example 2 (N-MOF-5) are shown, which means that the ligand exchange was occurred in the structure MOF.

### Experimental Example 6

By measuring the contact angle of the electrode containing the porous carbon structure in Example 1 and Comparative Example 1, the wettability of the electrode to the electrolyte was determined.

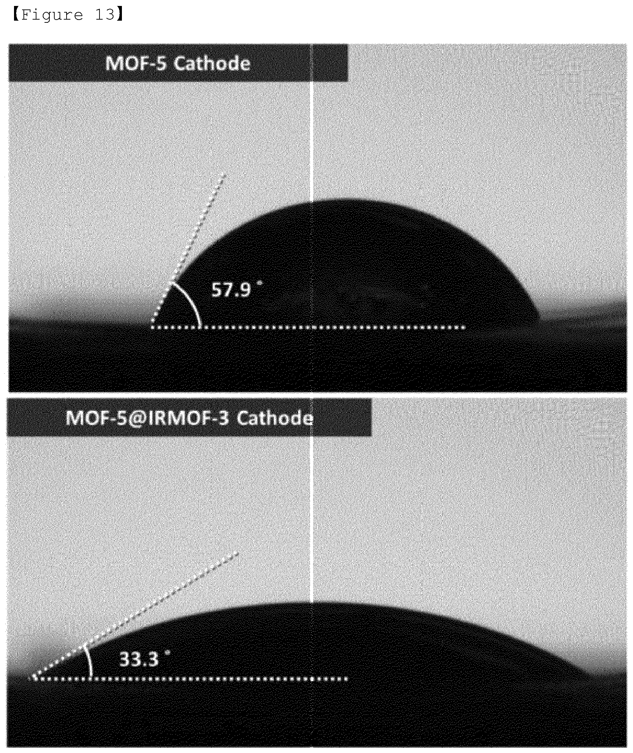

FIG. 13 is a photograph showing the result of measurement of contact angle of negative electrode (cathode) comprising the porous carbon structures of Example 1 and Comparative Example 1.

Referring to FIG. 13, it was found that the negative electrode containing MOF-5, which is the porous carbon structure of Comparative Example 1, is pure carbon without a hetero atom and has hydrophobicity, and the contact angle of water is 57.9°.

In addition, it was shown that the negative electrode containing MOF-5@N-MOF-5, which is the porous carbon structure of Example 1, is N-doped carbon, has improved electronegativity and is hydrophilic, and has a water contact angle of 33.3°.

From the measurement result of the contact angle of water, the contact angle of the negative electrode including MOF-5@N-MOF-5 of Example 1 is low and the polarity is improved, thereby improving the wettability of the electrolyte and improving the bonding force with lithium ions, and thus improving the performance of the battery.

## Claims

1. A porous carbon structure having a core-shell structure, wherein the core comprises a first metal organic framework (MOF), and the shell comprises a second MOF, wherein the second MOF is doped with a hetero element comprising at least one of N and S, the porous carbon structure being obtained by a method comprising the steps of
(S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours;
(S2) adding a second organic ligand containing at least one of N and S to the mixed solution and heating to form a MOF having a core-shell structure, wherein heating is performed at 35 to 100 °C for 15 minutes to 25 hours; and
(S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate·hexahydrate (Zn(NO₃)₂·6H₂O), zinc acetate·dihydrate (Zn(CH₃CO₂)₂·2H₂O) and zinc sulfate ·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

2. The porous carbon structure according to claim 1, wherein the porous carbon structure has a pore volume of 1.5 cc/g to 4.5 cc/g.

3. The porous carbon structure according to claim 1, wherein the porous carbon structure has a specific surface area of 1500 m²/g to 3000 m²/g.

4. A method for preparing a porous carbon structure comprising the steps of,
(S1) forming a MOF by heating a mixed solution obtained by dissolving a metal structure and a first organic ligand structure in an organic solvent, wherein the reaction conditions for forming the MOF are heating at a temperature of 100 to 150 °C for 6 to 40 hours;
(S2) adding a second organic ligand containing at least one of N and S to the mixed solution and heating to form a MOF having a core-shell structure, wherein heating is performed at 35 to 100 °C for 15 minutes to 25 hours; and
(S3) carbonizing the MOF having a core-shell structure formed in step (S2), wherein carbonization is performed at a temperature of 900 °C to 1500 °C under an inert atmosphere,
wherein the metal structure comprises at least one selected from the group consisting of zinc nitrate·hexahydrate (Zn(NO₃)₂·6H₂O), zinc acetate·dihydrate (Zn(CH₃CO₂)₂·2H₂O) and zinc sulfate ·hexahydrate (ZnSO₄·6H₂O),
wherein the first organic ligand structure comprises at least one selected from the group consisting of benzene-1,4-dicarboxylic acid, benzene-1,3,5-tricarboxylic acid, ethanedioic acid, propanedioic acid, butanedioic acid, pentanedioic acid, o-phthalic acid, m-phthalic acid, p-phthalic acid, 2-hydroxy-1,2,3-propanetricarboxylic acid, 1H-1,2,3-triazole, 1H-1,2,4-triazole and 3,4-dihydroxy-3-cyclobutene-1,2-dione, and
wherein the second organic ligand structure in step (S2) is selected from a second organic ligand structure containing N and a second organic ligand structure containing S,
wherein the second organic ligand structure containing N comprises at least one selected from the group consisting of 2-aminoterephthalic acid, 4-aminophthalic acid, 4-aminoisophthalic acid, 5-aminoisophthalic acid, 2,5-diaminoterephthalic acid, 2,2'-diamino-4,4'-stilbenedicarboxylic acid, 5-cyano-1,3-benzenedicarboxylic acid, 2-methylimidazole and 4,4',4"-s-triazine-2,4,6-triyl-tribenzoic acid, and
wherein the second organic ligand structure containing S comprises at least one selected from the group consisting of 2,5-disulfanylterephthalic acid (H₄(C₈H₂O₄S₂)), 2-sulfanylterephthalic acid and 2,5-thiophenedicarboxylic acid.

5. A positive electrode for a lithium secondary battery comprising the porous carbon structure of any one of claims 1 to 3.

6. The positive electrode for the lithium secondary battery according to claim 5, wherein the positive electrode comprises a positive electrode active material, wherein the positive electrode active material comprises a sulfur-containing material; and a porous carbon structure as a sulfur carrier.

7. A lithium secondary battery comprising the positive electrode of claim 5, a negative electrode, a separator interposed between the positive electrode and the negative electrode, and an electrolyte solution.

## Patentansprüche

1. Poröse Kohlenstoffstruktur mit einer Kern-Schale-Struktur, wobei der Kern ein erstes metallorganisches Gerüst (MOF) umfasst und die Schale ein zweites MOF umfasst, wobei das zweite MOF mit einem Heteroelement dotiert ist, das mindestens eines von N und S umfasst, wobei die poröse Kohlenstoffstruktur durch ein Verfahren erhalten wird, das die folgenden Schritte umfasst:
(S1) Bilden eines MOF durch Erhitzen einer gemischten Lösung, die durch Auflösen einer Metallstruktur und einer ersten organischen Ligandenstruktur in einem organischen Lösungsmittel erhalten wird, wobei die Reaktionsbedingungen zum Bilden des MOF Erhitzen bei einer Temperatur von 100 bis 150 °C für 6 bis 40 Stunden sind;
(S2) Zugeben eines zweiten organischen Liganden, der mindestens eines von N und S enthält, zu der gemischten Lösung und Erhitzen, um ein MOF mit einer Kern-Schale-Struktur zu bilden, wobei das Erhitzen bei 35 bis 100 °C für 15 Minuten bis 25 Stunden durchgeführt wird; und
(S3) Karbonisieren des in Schritt (S2) gebildeten MOF mit einer Kern-Schale-Struktur, wobei die Karbonisierung bei einer Temperatur von 900 °C bis 1500 °C unter einer inerten Atmosphäre durchgeführt wird,
wobei die Metallstruktur mindestens eines umfasst, das aus der Gruppe ausgewählt ist, die aus Zinknitrat·hexahydrat (Zn(NO₃)₂·6H₂O), Zinkacetat·dihydrat (Zn(CH₃CO₂)₂·2H₂O) und Zinksulfat·hexahydrat (ZnSO₄·6H₂O) besteht,
wobei die erste organische Ligandenstruktur mindestens eines umfasst, das aus der Gruppe ausgewählt ist, die aus Benzol-1,4-dicarbonsäure, Benzol-1,3,5-tricarbonsäure, Ethandisäure, Propandisäure, Butandisäure, Pentandisäure, o-Phthalsäure, m-Phthalsäure, p-Phthalsäure, 2-Hydroxy-1,2,3-propantricarbonsäure, 1H-1,2,3-Triazol, 1H-1,2,4-Triazol und 3,4-Dihydroxy-3-cyclobuten-1,2-dion besteht, und
wobei die zweite organische Ligandenstruktur in Schritt (S2) aus einer zweiten organischen Ligandenstruktur, die N enthält, und einer zweiten organischen Ligandenstruktur, die S enthält, ausgewählt ist,
wobei die zweite organische Ligandenstruktur, die N enthält, mindestens eines umfasst, das aus der Gruppe ausgewählt ist, die aus 2-Aminoterephthalsäure, 4-Aminophthalsäure, 4-Aminoisophthalsäure, 5-Aminoisophthalsäure, 2,5-Diaminoterephthalsäure, 2,2'-Diamino-4,4'-stilbendicarbonsäure, 5-Cyano-1,3-benzoldicarbonsäure, 2-Methylimidazol und 4,4',4"-s-Triazin-2,4,6-triyltribenzoesäure besteht, und
wobei die zweite organische Ligandenstruktur, die S enthält, mindestens eines umfasst, das aus der Gruppe ausgewählt ist, die aus 2,5-Disulfanylterephthalsäure (H₄(C₈H₂O₄S₂)), 2-Sulfanylterephthalsäure und 2,5-Thiophendicarbonsäure besteht.

2. Poröse Kohlenstoffstruktur nach Anspruch 1, wobei die poröse Kohlenstoffstruktur ein Porenvolumen von 1,5 cc/g bis 4,5 cc/g aufweist.

3. Poröse Kohlenstoffstruktur nach Anspruch 1, wobei die poröse Kohlenstoffstruktur eine spezifische Oberfläche von 1500 m²/g bis 3000 m²/g aufweist.

4. Verfahren zum Herstellen einer porösen Kohlenstoffstruktur, das die folgenden Schritte umfasst:
(S1) Bilden eines MOF durch Erhitzen einer gemischten Lösung, die durch Auflösen einer Metallstruktur und einer ersten organischen Ligandenstruktur in einem organischen Lösungsmittel erhalten wird, wobei die Reaktionsbedingungen zum Bilden des MOF Erhitzen bei einer Temperatur von 100 bis 150 °C für 6 bis 40 Stunden sind;
(S2) Zugeben eines zweiten organischen Liganden, der mindestens eines von N und S enthält, zu der gemischten Lösung und Erhitzen, um ein MOF mit einer Kern-Schale-Struktur zu bilden, wobei das Erhitzen bei 35 bis 100 °C für 15 Minuten bis 25 Stunden durchgeführt wird; und
(S3) Karbonisieren des in Schritt (S2) gebildeten MOF mit einer Kern-Schale-Struktur, wobei die Karbonisierung bei einer Temperatur von 900 °C bis 1500 °C unter einer inerten Atmosphäre durchgeführt wird,
wobei die Metallstruktur mindestens eines umfasst, das aus der Gruppe ausgewählt ist, die aus Zinknitrat·hexahydrat (Zn(NO₃)₂·6H₂O), Zinkacetat·dihydrat (Zn(CH₃CO₂)₂·2H₂O) und Zinksulfat·hexahydrat (ZnSO₄·6H₂O) besteht,
wobei die erste organische Ligandenstruktur mindestens eines umfasst, das aus der Gruppe ausgewählt ist, die aus Benzol-1,4-dicarbonsäure, Benzol-1,3,5-tricarbonsäure, Ethandisäure, Propandisäure, Butandisäure, Pentandisäure, o-Phthalsäure, m-Phthalsäure, p-Phthalsäure, 2-Hydroxy-1,2,3-propantricarbonsäure, 1H-1,2,3-Triazol, 1H-1,2,4-Triazol und 3,4-Dihydroxy-3-cyclobuten-1,2-dion besteht, und
wobei die zweite organische Ligandenstruktur in Schritt (S2) aus einer zweiten organischen Ligandenstruktur, die N enthält, und einer zweiten organischen Ligandenstruktur, die S enthält, ausgewählt ist,
wobei die zweite organische Ligandenstruktur, die N enthält, mindestens eines umfasst, das aus der Gruppe ausgewählt ist, die aus 2-Aminoterephthalsäure, 4-Aminophthalsäure, 4-Aminoisophthalsäure, 5-Aminoisophthalsäure, 2,5-Diaminoterephthalsäure, 2,2'-Diamino-4,4'-stilbendicarbonsäure, 5-Cyano-1,3-benzoldicarbonsäure, 2-Methylimidazol und 4,4',4"-s-Triazin-2,4,6-triyltribenzoesäure besteht, und
wobei die zweite organische Ligandenstruktur, die S enthält, mindestens eines umfasst, das aus der Gruppe ausgewählt ist, die aus 2,5-Disulfanylterephthalsäure (H₄(C₈H₂O₄S₂)), 2-Sulfanylterephthalsäure und 2,5-Thiophendicarbonsäure besteht.

5. Positive Elektrode für eine Lithiumsekundärbatterie, die die poröse Kohlenstoffstruktur nach einem der Ansprüche 1 bis 3 umfasst.

6. Positive Elektrode für die Lithiumsekundärbatterie nach Anspruch 5, wobei die positive Elektrode ein Positivelektrodenaktivmaterial umfasst, wobei das Positivelektrodenaktivmaterial Elektrode ein schwefelhaltiges Material und eine poröse Kohlenstoffstruktur als Schwefelträger umfasst.

7. Lithiumsekundärbatterie, die die positive Elektrode nach Anspruch 5, eine negative Elektrode, einen Separator, der zwischen der positiven Elektrode und der negativen Elektrode angeordnet ist, und eine Elektrolytlösung umfasst.

## Revendications

1. Structure de carbone poreuse ayant une structure noyau-enveloppe, où le noyau comprend une première ossature organométallique (MOF), et l'enveloppe comprend une deuxième MOF, où la deuxième MOF est dopée par un hétéro-élément comprenant soit un N, soit un S, la structure de carbone poreuse étant obtenue par un procédé comprenant les étapes consistant à
(S1) former une MOF en chauffant une solution mélangée obtenue en dissolvant une structure métallique et une première structure de ligand organique dans un solvant organique, où les conditions de réaction pour former la MOF chauffent à une température de 100 à 150°C pendant 6 à 40 heures ;
(S2) ajouter un deuxième ligand organique contenant soit un N, soit un S à la solution mélangée et chauffer pour former une MOF ayant une structure noyau-enveloppe, où le chauffage est effectué de 35 à 100°C pendant 15 minutes à 25 heures ; et
(S3) carboniser la MOF ayant une structure noyau-enveloppe formée à l'étape (S2), où la carbonisation est effectuée à une température de 900°C à 1500°C sous atmosphère inerte,
où la structure métallique comprend un ou plusieurs éléments sélectionnés dans le groupe constitué de nitrate de zinc hexahydraté (Zn(NO₃)₂·6H₂O), acétate de zinc dihydraté (Zn(CH₃CO₂)₂·2H₂O) et sulfate de zinc hexahydraté (ZnSO₄·6H₂O),
où la première structure de ligand organique comprend un ou plusieurs éléments sélectionnés dans le groupe constitué d'acide benzène-1,4-dicarboxylique, acide benzène-1,3,5-tricarboxylique, acide éthanedioïque, propanedioïque, acide butanedioïque, acide pentanedioïque, acide o-phtalique, acide m-phtalique, acide p-phtalique, acide 2-hydroxy-1,2,3-propanetricarboxylique, 1H-1,2,3-triazole, 1H-1,2,4-triazole et 3,4-dihydroxy-3-cyclobutène-1,2-dione, et
où la deuxième structure de ligand organique à l'étape (S2) est sélectionnée parmi une deuxième structure de ligand organique contenant N et une deuxième structure de ligand organique contenant S,
où la deuxième structure de ligand organique contenant N comprend un ou plusieurs éléments sélectionnés dans le groupe constitué d'acide 2-aminotéréphtalique, acide 4-aminophtalique, acide 4-aminoisophtalique, acide 5-aminoisophtalique, acide 2,5-diaminotéréphtalique, acide 2,2'-diamino-4,4'-stilbenedicarboxylique, acide 5-cyano-1,3-benzènedicarboxylique, 2-méthylimidazole et acide 4,4',4"-s-triazine-2,4,6-triyl-tribenzoïque, et
où la deuxième structure de ligand organique contenant S comprend un ou plusieurs éléments sélectionnés dans le groupe constitué d'acide 2,5-disulfanyltéréphtalique (H₄(C₈H₂O₄S₂)), acide 2-sulfanyltéréphtalique et acide 2,5-thiophènedicarboxylique.

2. Structure de carbone poreuse selon la revendication 1, où la structure de carbone poreuse a un volume de pores de 1,5 cc/g à 4,5 cc/g.

3. Structure de carbone poreuse selon la revendication 1, où la structure de carbone poreuse a une surface spécifique de 1500 m²/g à 3000 m²/g.

4. Procédé de préparation d'une structure de carbone poreuse comprenant les étapes consistant à
(S1) former une MOF en chauffant une solution mélangée obtenue en dissolvant une structure métallique et une première structure de ligand organique dans un solvant organique, où les conditions de réaction pour former la MOF chauffent à une température de 100 à 150°C pendant 6 à 40 heures ;
(S2) ajouter un deuxième ligand organique contenant soit un N, soit un S à la solution mélangée et chauffer pour former une MOF ayant une structure noyau-enveloppe, où le chauffage est effectué de 35 à 100°C pendant 15 minutes à 25 heures ; et
(S3) carboniser la MOF ayant une structure noyau-enveloppe formée à l'étape (S2), où la carbonisation est effectuée à une température de 900°C à 1500°C sous atmosphère inerte,
où la structure métallique comprend un ou plusieurs éléments sélectionnés dans le groupe constitué de nitrate de zinc hexahydraté (Zn(NO₃)₂·6H₂O), acétate de zinc dihydraté (Zn(CH₃CO₂)₂·2H₂O) et sulfate de zinc hexahydraté (ZnSO₄·6H₂O),
où la première structure de ligand organique comprend un ou plusieurs éléments sélectionnés dans le groupe constitué d'acide benzène-1,4-dicarboxylique, acide benzène-1,3,5-tricarboxylique, acide éthanedioïque, acide propanedioïque, acide butanedioïque, acide pentanedioïque, acide o-phtalique, acide m-phtalique, acide p-phtalique, acide 2-hydroxy-1,2,3-propanetricarboxylique, 1H-1,2,3-triazole, 1H-1,2,4-triazole et 3,4-dihydroxy-3-cyclobutène-1,2-dione, et
où la deuxième structure de ligand organique à l'étape (S2) est sélectionnée parmi une deuxième structure de ligand organique contenant N et une deuxième structure de ligand organique contenant S,
où la deuxième structure de ligand organique contenant N comprend un ou plusieurs éléments sélectionnés dans le groupe constitué d'acide 2-aminotéréphtalique, acide 4-aminophtalique, acide 4-aminoisophtalique, acide 5-aminoisophtalique, acide 2,5-diaminotéréphtalique, acide 2,2'-diamino-4,4'-stilbenedicarboxylique, acide 5-cyano-1,3-benzènedicarboxylique, 2-méthylimidazole et acide 4,4',4"-s-triazine-2,4,6-triyl-tribenzoïque, et
où la deuxième structure de ligand organique contenant S comprend un ou plusieurs éléments sélectionnés dans le groupe constitué d'acide 2,5-disulfanyltéréphtalique (H₄(C₈H₂O₄S₂)), acide 2-sulfanyltéréphtalique et acide 2,5-thiophènedicarboxylique.

5. Électrode positive pour une batterie rechargeable au lithium comprenant la structure de carbone poreuse selon l'une quelconque des revendications 1 à 3.

6. Électrode positive pour la batterie rechargeable au lithium selon la revendication 5, où l'électrode positive comprend un matériau actif d'électrode positive active, où le matériau actif d'électrode positive comprend un matériau contenant du soufre ; et une structure de carbone poreuse portant le soufre.

7. Batterie rechargeable au lithium comprenant l'électrode positive selon la revendication 5, une électrode négative, un séparateur interposé entre l'électrode positive et l'électrode négative, et une solution électrolytique.
